# EUROPÄISCHE PATENTANMELDUNG

(11) **EP 2 378 563 A2**
(43) Veröffentlichungstag der Anmeldung: **19.10.2011**
(21) Anmeldenummer: 11162346.8
(22) Anmeldetag: 14.04.2011
(51) Int. Cl.: H01L 31/042

(54) **Montagesystem für Solarmodule**

(30) Priorität: 19.04.2010 DE 202010005250 U
(71) Anmelder: SCHÜCO International KG, 33609 Bielefeld (DE)
(72) Erfinder: Ritzler, Ralf, 33607 Bielefeld (DE); Salzer, Wadim, 33729 Bielefeld (DE); Rosenwirth, Andreas, 32130 Enger (DE); Imkamp, Gerd, 33334 Gütersloh (DE); Stockhausen, Andre, 32052 Herford (DE); Hanke, Carsten, 33729 Bielefeld (DE)
(74) Vertreter: Dantz, Jan Henning

(57) **Zusammenfassung**

Montagesystem für Solarmodule (6), mit einem Gestell (2) auf dem ein oder mehrere plattenförmige Solarmodule (6) gehalten sind, wobei das Gestell (2) auf einer Unterkonstruktion (7, 9, 11) abgestützt ist, die an einem Untergrund festgelegt ist, dadurch gekennzeichnet, dass ein Anker (13, 35) vorgesehen ist, der an einem Bauwerk (17) festlegbar ist und das Gestell (2) in einem oberen Bereich abstützt, wobei das Gestell (2) relativ zu dem Anker (13, 35) verschiebbar gehalten ist.

## Beschreibung

Die vorliegende Erfindung betrifft ein Montagesystem für Solarmodule, mit einem Gestell auf dem ein oder mehrere plattenförmige Solarmodule gehalten sind, wobei das Gestell auf einer Unterkonstruktion abgestützt ist, das an einem Untergrund festgelegt ist.

Es sind Montagesysteme für Solarmodule bekannt, bei denen ein Gestell auf einer Unterkonstruktion, z. B. Rammpfosten, abgestützt ist. Das Gestell wird dabei in einem vorbestimmten Neigungswinkel entweder auf mehreren die Unterkonstruktion bildenden Pfosten montiert, wobei vordere kurze Pfosten zur Südseite und hintere längere Pfosten zur Nordseite angeordnet sind, oder auf nur einem Pfosten, wobei das Gestell in etwa im Mittelpunkt getragen wird, so dass eine gleichmäßige Lastabtragung gegeben ist. Diese Montagesysteme können auf oder an Gebäuden angeordnet sein oder auf Freilandflächen. Nachteilig ist, dass neben dem Gestell relativ aufwendige und teuere Unterkonstruktionen bereitgestellt werden müssen.

Des Weiteren sind fassadenintegrierte Montagesysteme für Solarmodule bekannt, die einen Teil der Gebäudehülle bilden. Hierbei haben die Systeme neben den reinen Haltefunktionen auch noch weitere Aufgaben zu erfüllen, wie z. B. Wärmeisolation und/oder das Bereitstellen einer dichten Fassade bzw. eines dichten Fassadenabschnittes. Nachteilig ist hierbei, dass eine Nachrüstung an der Gebäudehülle nicht möglich ist bzw. nur mit erheblichem Aufwand betrieben werden kann.

Es ist daher Aufgabe der vorliegenden Erfindung, ein Montagesystem für Solarmodule zu schaffen, das flexibel bei unterschiedlichen örtlichen Gegebenheiten einfach montiert werden kann und zur Nachrüstung an Gebäuden geeignet ist.

Diese Aufgabe wird mit einem Montagesystem mit den Merkmalen des Anspruches 1 gelöst.

Erfindungsgemäß ist das Gestell relativ zu dem Anker verschiebbar gehalten, so dass sowohl bei der Montage als auch im montierten Zustand eine Relativbewegung zwischen Gestell und Anker möglich ist. Dadurch wird die Montage vereinfacht, da Bodenunebenheiten ausgeglichen und Montagehöhen der Anker flexibel gewählt werden können. Zudem können auch Wärmespannungen in Folge einer Ausdehnung des Gestells vermieden werden- Der Anker kann dann beliebig an einer passenden Stelle einer Wand bzw. Fassade eines Gebäudes festgelegt werden, ohne dass eine exakte Positionierung an dem Gestell erforderlich ist. Die verschiebbare Lagerung gewährleistet eine entsprechende Anpassungsmöglichkeit.

Gemäß einer bevorzugten Ausgestaltung sind an dem Anker Führungsmittel angebracht oder ausgebildet, die eine Verschiebung entlang des Profils in dessen Längsrichtung ermöglichen, wobei der Verstellweg vorzugsweise mehr als 10cm, aber auch mehr als 3 m beträgt. Das Profil kann dabei wahlweise als zusätzliches Bauteil an dem Gestell festgelegt sein oder durch ein sich nach oben erstreckendes Profil des Gestells gebildet sein. Vorzugsweise wird ein sich nach oben erstreckendes Profil des Gestells verwendet, das der Anker verschiebbar hält, so dass das Gestell einfach aufgebaut ist. Das Gestell kann dabei mehrere sich nach oben erstreckende Profile aufweisen, die über ein oder mehrere horizontale Profile miteinander verbunden sind. An diesem Gestell sind dann ein oder mehrere plattenförmige Solarmodule festgelegt.

Für eine gute Führung sind vorzugsweise Führungsmittel an dem Anker vorgesehen, die ein sich nach oben erstreckendes Profil zumindest teilweise umgreifen. Dadurch kann bei der Montage das entsprechende Führungsmittel bzw. der gesamte Anker auf einfache Weise von oben auf das Profil aufgeschoben werden, damit es in einer beliebigen Höhe befestigt wird.

Die Führung kann auch über ein Langloch erfolgen, das in dem sich nach oben erstreckenden Profil oder in einem damit verbundenen Bauteil ausgebildet ist, das dann von einem Bolzen für eine Längsführung durchgriffen ist.

Gemäß einer weiteren Ausgestaltung ist der Anker mit einem Halteteil verbunden, das gegenüber einem an dem Bauwerk, beispielsweise einer Wand oder Fassade, festgelegten Teil in horizontale Richtung verstellbar ausgebildet ist. Dadurch kann bei der Montage des Gestells auch ein Toleranzausgleich in horizontale Richtung vorgenommen werden, um z.B. passende Fixpunkte in der Fassade zu finden.

Wenn der Anker mit einem Halteteil verbunden ist, das gegenüber einem an dem Bauwerk festgelegten Teil um eine horizontale und/oder vertikale Achse verschwenkbar gelagert ist, ergibt sich eine besonders gute Möglichkeit, die Solarmodule auszurichten, denn der Wirkungsgrad von Solarmodulen hängt von dem Einfallswinkel der Sonnenstrahlen ab, so dass eine optimierte Ausrichtung der Solarmodule sowohl im Hinblick auf die Himmelsrichtung als auch auf den Neigungswinkel für einen höheren Wirkungsgrad vorteilhaft ist. Durch eine horizontale und vertikale Verschwenkbarkeit eines Teils kann eine Ausrichtung sowohl zur Himmelsrichtung als auch im Hinblick auf den Neigungswinkel erfolgen. Dadurch können die Solarmodule auch an Gebäudewänden oder Fassaden festgelegt werden, die nicht nach Süden (auf der Nordhalbkugel) ausgerichtet sind. Zur Einstellung des Neigungswinkels kann zudem der Anker in der Länge verstellbar ausgebildet sein.

Ferner kann die Unterkonstruktion ein Bodenteil aufweisen, das um eine horizontale Achse verschwenkbaren gelagert ist, so dass durch Änderung der Länge des Ankers der Neigungswinkel des an dem Gestell befestigten Solarmoduls verändert werden kann. Bevorzugte Neigungswinkel gegenüber der Horizontalen sind dabei 60° bis 80°, so dass die Unterkonstruktion keinen zu großen Abstand zum Gebäude besitzt.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht eines erfindungsgemäßen Montagesystems;
- Figur 2: eine Seitenansicht des Montagesystems der Figur 1;
- Figur 3: eine perspektivische Ansicht eines Ankers des Montagesystems der Figur 1;
- Figur 4: eine perspektivische Ansicht eines modifizierten Ankers für ein Montagesystem;
- Figur 5: eine perspektivische Ansicht eines weiteren Ausführungsbeispieles eines Ankers;
- Figur 6: eine perspektivische Ansicht eines weiteren Ausführungsbeispieles eines modifizierten Ankers;
- Figuren 7A bis 7C: mehrere Ansichten einer weiteren Ausführungsform eines Ankers für ein Montagesystem;
- Figuren 8A bis 8C: mehrere schematische Ansichten des Montagesystems der Figur 1 bei der Montage;
- Figur 9: eine Draufsicht auf ein Gebäude mit mehreren montierten Solarmodulen;
- Figur 10: eine Detailansicht eines längenverstellbaren Ankers, und
- Figur 11: eine Detailansicht eines längenverstellbaren Ankers mit modifiziertem Verstellmechanismus.

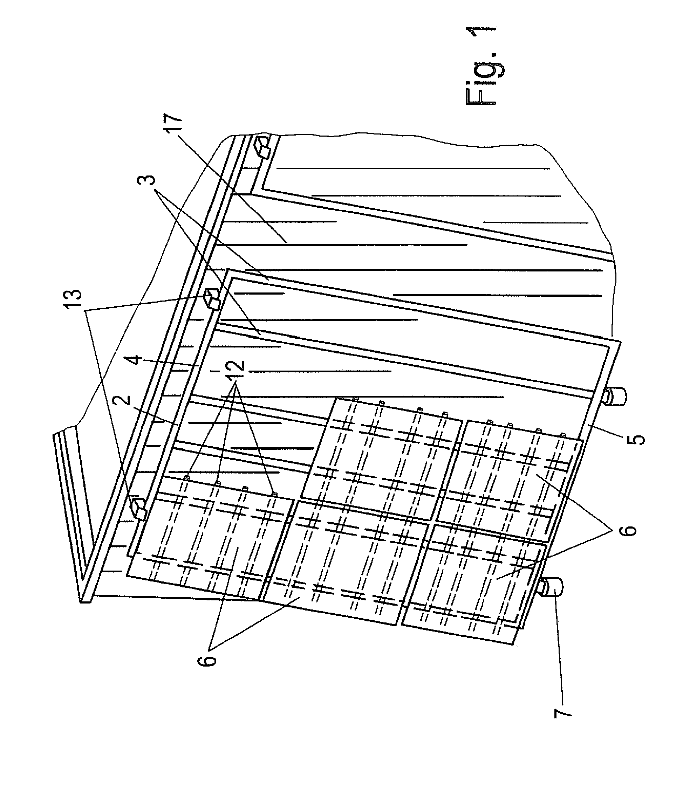

Ein Montagesystem 1 für Solarmodule umfasst ein Gestell 2, das aus nach oben gerichteten Profilen 3 und horizontalen Profilen 4 und 5 besteht, wobei in Figur 1 lediglich ein oberes horizontales Profil 4 und ein unteres horizontales Profil 5 gezeigt sind. Im mittleren Bereich können noch weiteren horizontale Profile angeordnet sein. An dem Gestell 2 sind ein oder mehrere Solarmodule 6 festgelegt, die über leistenförmige Befestigungsmittel 12 an dem Gestell 2 gehalten sind.

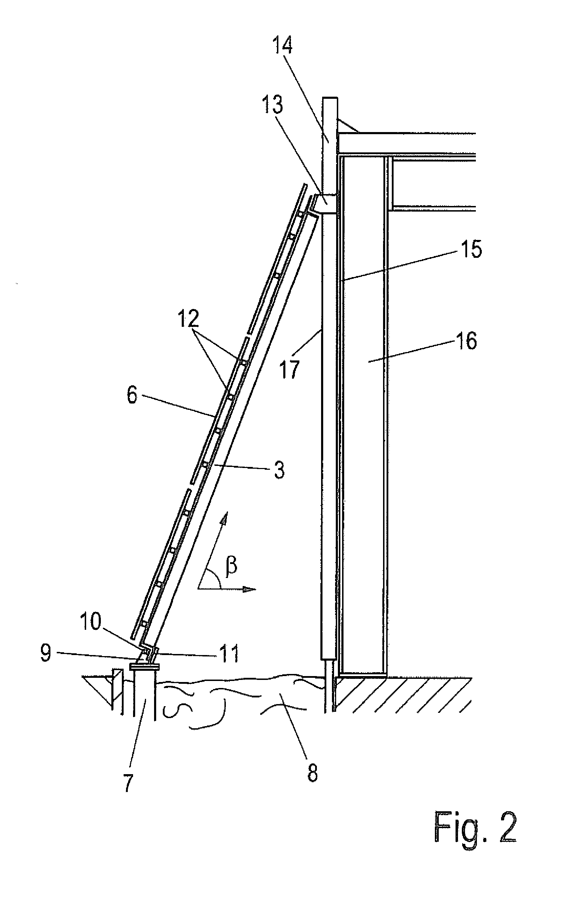

Das Gestell 2 ist bodenseitig durch eine Unterkonstruktion abgestützt, welche die Gewichtslasten des Gestells 2 mit den Solarmodulen 6 nahezu vollständig abträgt. Die Unterkonstruktion umfasst ein Bodenteil 11 und ein feststehendes Teil 9, das an einem Rammpfosten 7 festgelegt ist, der im Erdreich 8 verankert ist (Figur 2).

Im oberen Bereich ist das Gestell 2 an beabstandeten Stellen über schematisch dargestellte Anker 13 an einer Wand 17 bzw. Fassade eines Gebäudes festgelegt. Das Gestell 2 kann sich auch über größere Höhen, beispielsweise über 4 m, erstrecken und an Wänden von Industriehallen montiert werden. Um einen optimalen Neigungswinkel β entsprechend der örtlichen Gegebenheiten zu erhalten, ist das Bodenteil 11 beabstandet von der Wand 17 des Gebäudes angeordnet, wobei der Neigungswinkel beispielsweise in einem Bereich zwischen 60° und 80° liegen kann. Die Wand 17 des Gebäudes umfasst eine Isolierung 14, die benachbart zu einer Innenwand 15 angeordnet ist. Im Innenbereich ist ein Pfosten 16 angeordnet, der für die Statik notwendig ist und an dem ein Anker 13 festgelegt werden kann. Es ist möglich, im Innenbereich ein Gegenlager für die Anker 13 vorzusehen.

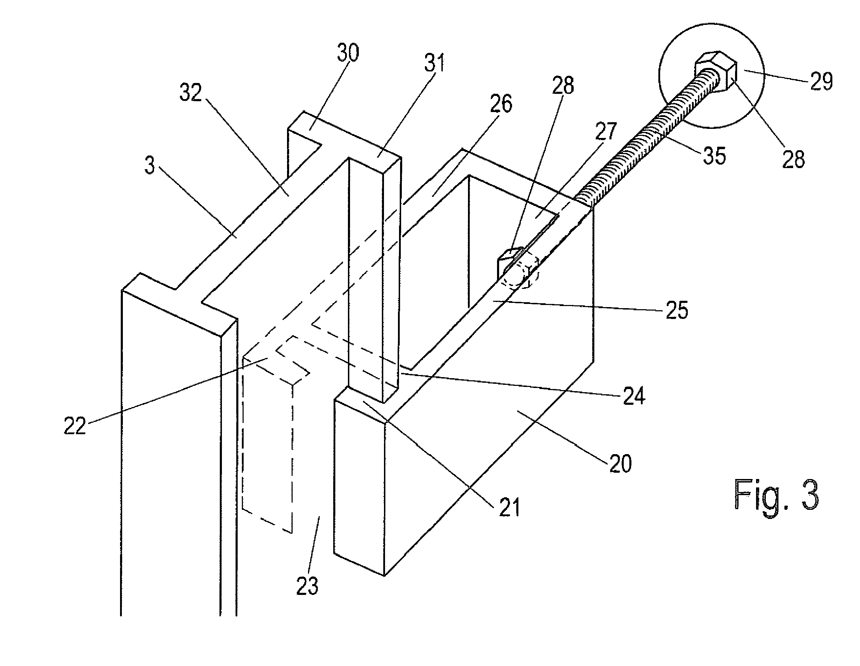

In Figur 3 ist die Halterung für einen sich nach oben im Neigungswinkel β erstreckenden Pfosten 3 dargestellt, der als Doppel-T-Profil ausgebildet ist und entsprechend an gegenüberliegenden Seiten jeweils zwei seitlich hervorstehende Stege 30 und 31 umfasst, die über einen Mittelsteg 32 miteinander verbunden sind. Das Profil 3 ist über einen Halter 20 verschiebbar gelagert, der U-förmig ausgebildet ist und zwei Schenkel 25 und 26 aufweist, die an einem Boden 27 miteinander verbunden sind. Am Boden 27 ist ein als Gewindestab ausgebildeter Anker 35 vorgesehen, der an einem Pfosten 16 des Gebäudes oder an einem anderen Bauteil des Gebäudes fixiert ist. An einer Wanddurchführung ist eine Dichtung 29 über eine Mutter 28 an dem Anker 35 fixiert. Der Halter 20 ist ebenfalls über Muttern 28 in der gewünschten Position fixiert. Um das Profil 3 verschiebbar zu lagern, sind an den Schenkeln 25 und 26 nach innen gerichtete Stege 21 und 22 sowie ein Verbindungssteg 24 ausgebildet, die die Stege 30 und 31 an dem Profil 3 umgreifen. Der Mittelsteg 32 ist durch einen Schlitz 23 zwischen den Stegen 21 und 22 durchgeführt. Dadurch kann das Profil 3 in Längsrichtung verschoben werden, ist im Übrigen aber an dem Halter 20 festgelegt.

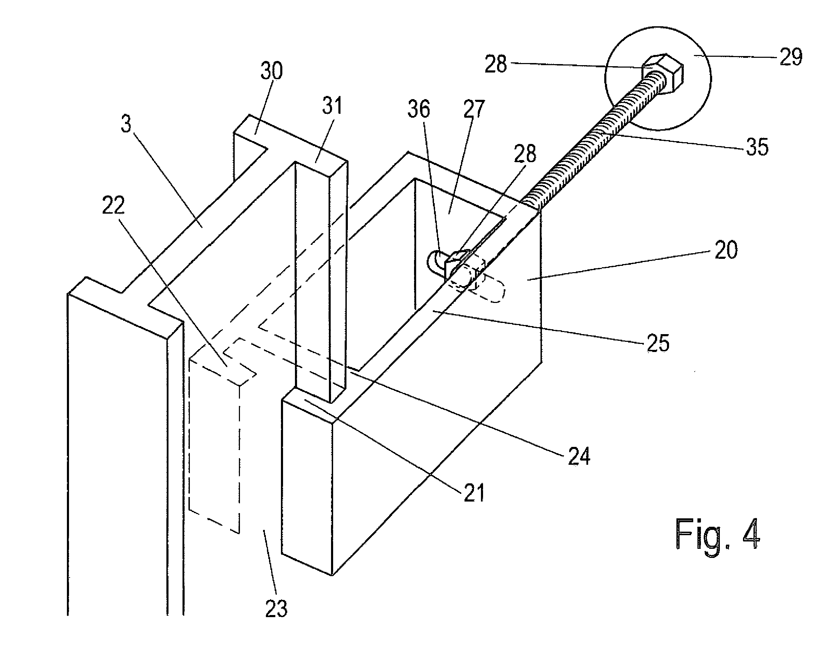

In Figur 4 ist eine modifizierte Ausgestaltung eines Halteteils 20 gezeigt, das bis auf ein horizontales Langloch 36 wie in Figur 3 ausgebildet ist. Durch das horizontale Langloch 36 kann eine horizontale Verstellung des Halteteils 20 relativ zu dem an der Wand festgelegten Anker 35 vorgenommen werden, so dass bei der Befestigung des Profils 3 eine Ausrichtung sowohl in horizontale Richtung parallel zur Wand als auch senkrecht zur Wand erfolgen kann, wenn das Halteteil 20 über zwei Muttern 28 festgelegt ist.

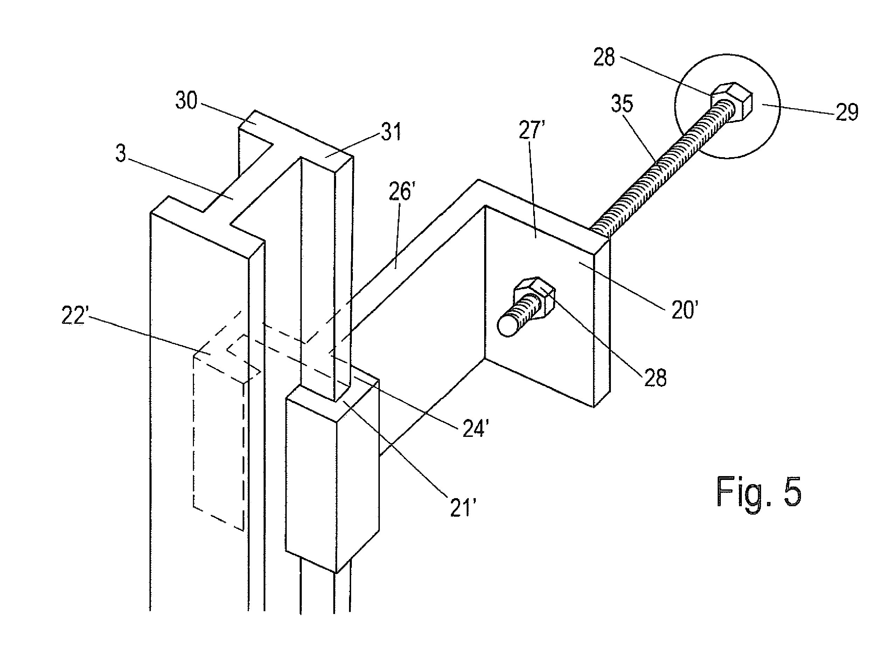

In Figur 5 ist eine modifizierte Ausgestaltung eines Halters 20' gezeigt, der winkelförmig ausgebildet ist und einen Boden 27' aufweist, der an dem Anker 35 festgelegt ist. Von dem Boden 27' erstreckt sich ein abgewinkelter Steg 26' zu dem Profil 3, wobei an dem Steg 26' endseitig eine Führungseinrichtung 24' vorgesehen ist, die mit zwei Stegen 21' und 22' die Stege 30 und 31 des Profils 3 umgreift, so dass das Profil 3 in Längsrichtung verschiebbar an dem Halter 20' geführt ist.

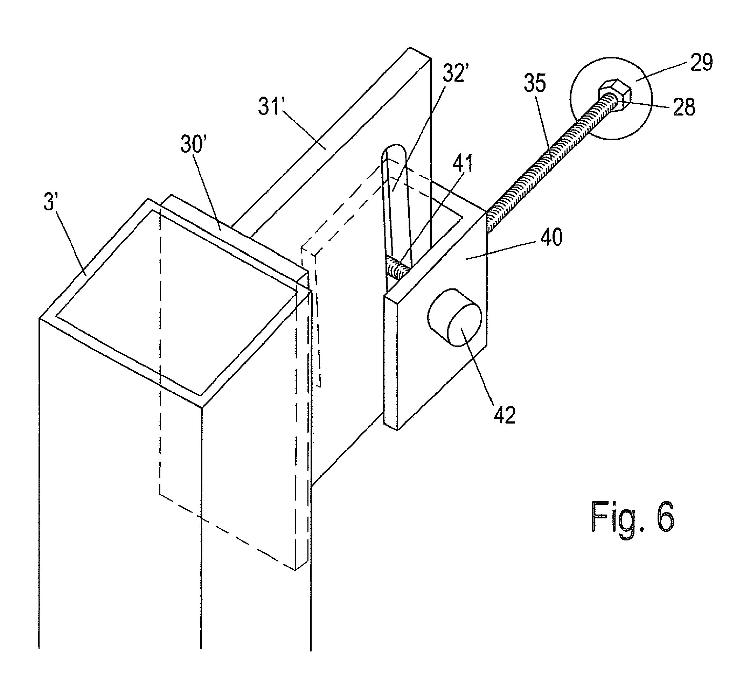

In Figur 6 ist eine weitere Ausführungsform zur verschiebbaren Lagerung eines Profils 3' gezeigt, das abweichend von den vorangegangenen Ausführungsbeispielen als Hohlprofil ausgebildet ist. Um das Profil 3' an dem Anker 35 festzulegen, ist eine Platte 30' an dem Profil 3' festgelegt, an dem ein zur Wand 17 des Gebäudes hervorstehendes Schwert 31' festgelegt ist. An dem Schwert 31' ist ein Langloch 32' ausgebildet, das von einem Bolzen 41 durchgriffen ist. Der Bolzen 41 ist über Befestigungsmittel 42 an einem U-förmigen Halter 40 festgelegt, der wiederum an dem Anker 35 fixiert ist. Dadurch wird eine Führung des Profils 3' an dem Halter 40 ermöglicht. Das Langloch 32' könnte auch direkt in dem Profil 3' angeordnet sein.

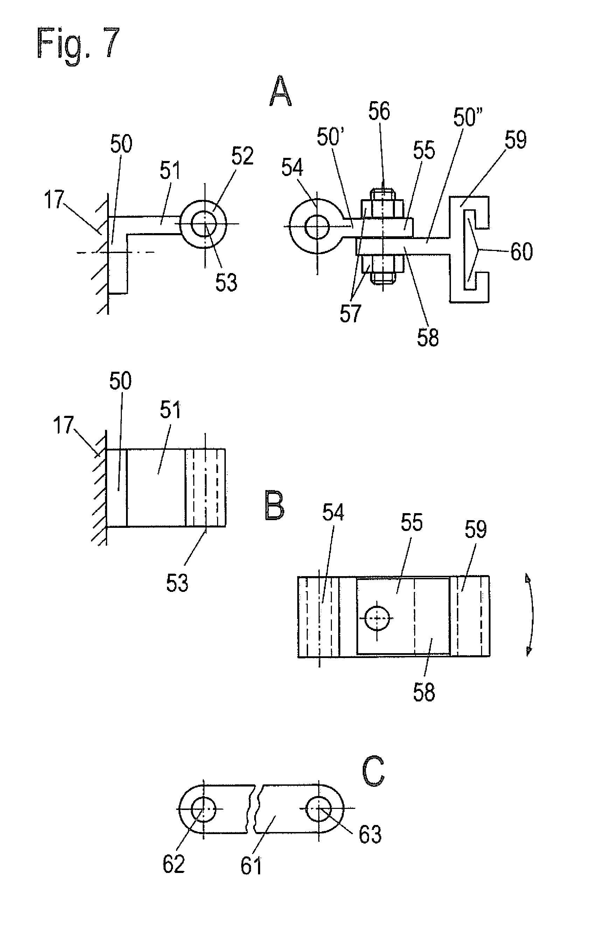

In den Figuren 7A bis 7C ist eine weitere Ausgestaltung eines Halteelementes gezeigt, um ein Gestell 2 an einer Wand 17 eines Gebäudes festzulegen. Ein erstes Ankerteil 50 ist an einer schematisch dargestellten Wand 17 festgelegt und umfasst einen hervorstehenden Abschnitt 51, an dem eine Hülse 52 zur Ausbildung einer Drehachse 53 angeordnet ist. An der Hülse 52 ist über eine nicht dargestellte Achse eine zweite Hülse 54 eines zweiten Ankerteils 50' festgelegt, das auf der gegenüberliegenden Seite eine Hülse 55 aufweist, die von einer Achse 56 durchgriffen ist. An der Achse 56 ist eine Hülse 58 eines dritten Ankerteils 50" fixiert, die ebenfalls von der Achse 56 durchgriffen ist, wobei das zweite Ankerteil 50' und das dritte Ankerteil 50" über Muttern 57 an der Achse 56 aneinander gesichert sind. An dem dritten Ankerteil 50" ist ein Führungselement 59 mit Nuten 60 zum Einfügen eines Abschnittes eines Profils 3 angeordnet.

Die Fixierung der Hülsen 52 und 54 kann wie bei den Hülsen 55 und 58 erfolgen, so dass das dritte Ankerteil 50" sowohl um eine horizontale Achse als auch um eine vertikale Achse verschwenkbar an dem ersten Ankerteil 50 gelagert ist.

Zudem kann zwischen der Hülse 52 und der Hülse 54 ein Verlängerungselement 61 eingesetzt werden, das an gegenüberliegenden Enden Öffnungen 62 und 63 aufweist, in die entsprechende Achsen eingesteckt werden können.

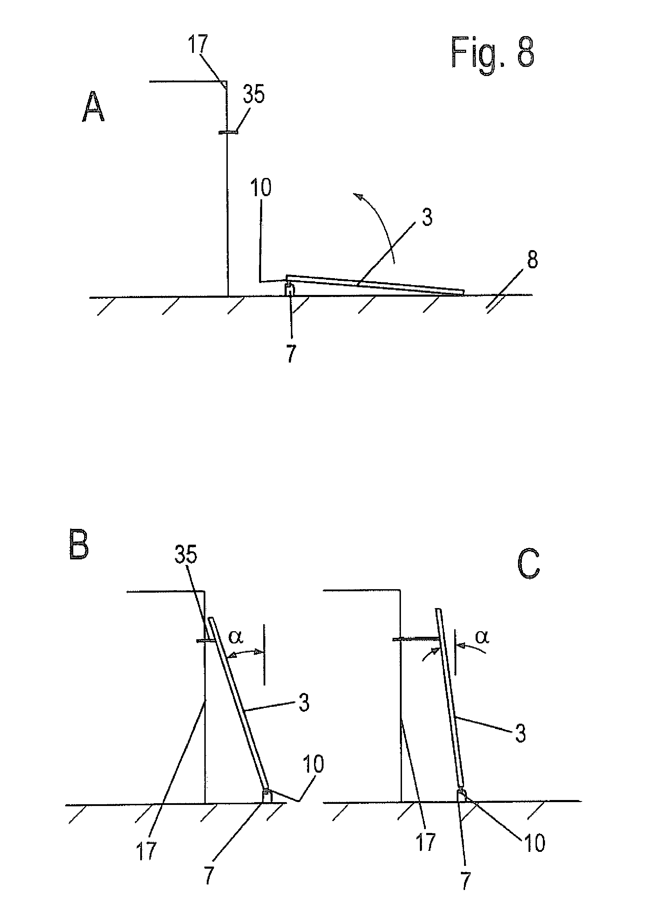

In den Figuren 8A bis 8C ist die Montage eines erfindungsgemäßen Montagesystems schematisch dargestellt. In Figur 8A ist bodenseitig ein Rammpfosten 7 im Erdreich 8 montiert, an dem ein feststehendes Teil 9 fixiert ist, an dem das Bodenteil 11 um eine Achse 10 verschwenkbar gelagerten ist. Das Bodenteil 11 ist an einem Profil 3 festgelegt, wobei das Profil 3 zunächst am Boden liegt und am Boden mit anderen Profilen 3 durch horizontale Profile 4 und 5 zu einem Gestell 2 verbindbar ist. Zudem können am Boden auch schon Montagearbeiten an den Solarmodulen 6 und dem Gestell 2 durchgeführt werden. Ferner wird an einer Wand 17 des Gebäudes ein Anker 35 festgelegt.

Die Profile 3 können in einer Zwischenposition über dem Boden abgestützt gehalten werden, um die Solarmodule 6 festzulegen, beispielsweise durch Einschieben in ein entsprechendes Verbindungssystem. Ferner können die Solarmodule 6 schon miteinander verkabelt werden.

Anschließend werden die Profile 3, wahlweise einzeln oder zusammen mit dem Gestell 2, nach oben verschwenkt. Danach wird ein Halteteil 20, 20' oder das dritte Ankerteil 59' auf das Profil 3 geschoben und an dem Anker 35 festgelegt. Dabei ist das Profile 3 und somit auch die Solarmodule 6 in einem Winkel α zur Vertikalen geneigt angeordnet. Der Neigungswinkel α kann abhängig von der Jahreszeit etwas größer oder kleiner gewählt werden, vorzugsweise zwischen 10 und 30°.

Sollte ein Solarmodul 6 ausgetauscht werden müssen oder eine andere Reparatur durchgeführt werden müssen, können die Halteteile 20, 20' oder das dritte Ankerteil 59' gelöst werden, und das Gestell 2 wird nach unten geschwenkt, wahlweise auf den Boden oder in eine Zwischenposition über dem Boden. Dann können Reparaturarbeiten durchgeführt werden, bevor das Gestell 2 wieder nach oben verschenkt und fixiert wird.

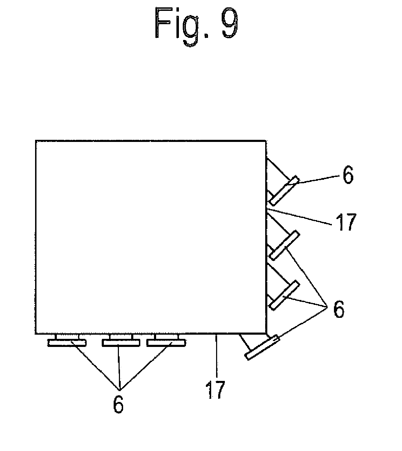

In Figur 9 ist ein Gebäude mit mehreren montierten Solarmodulen 6 auf den erfindungsgemäßen Montagesystemen schematisch gezeigt. Da das Gestell 2 am Bodenteil verschwenkbar gelagert ist, kann der Neigungswinkel α eingestellt werden. Zudem ist es auch möglich, die Solarmodule 6 winklig zur Ebene einer Wand 17 des Gebäudes auszurichten, wie dies auf dem rechten Teil der Darstellung gezeigt ist. Hierfür wird beispielsweise ein mehrteiliger Anker 50, 50' und 50" eingesetzt, der eine entsprechende optimierte Ausrichtung zur Befestigung der Solarmodule 6 ermöglicht.

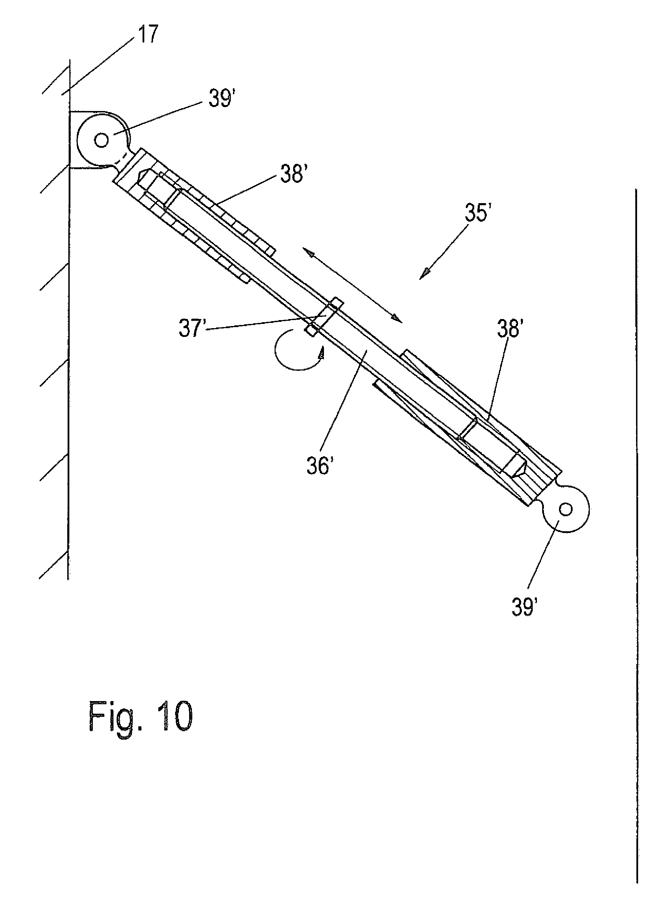

In Figur 10 ist schematisch ein längenverstellbarer Anker 35' gezeigt, bei dem ein stangenförmiges Gewindeteil 36' mittig mit einem Werkzeugansatz 37' versehen ist und auf gegenüberliegenden Seiten in eine Hülse 38' eingedreht ist. An der Hülse 38' ist ein Anbindungspunkt 39' vorgesehen, damit der Anker 35' an einer Wand 17 eines Gebäudes bzw. mit einem Halter 20, 20' oder 40 verbunden werden kann. Durch die Längenänderung des Ankers 35' kann der Neigungswinkel der Solarmodule verstellt werden.

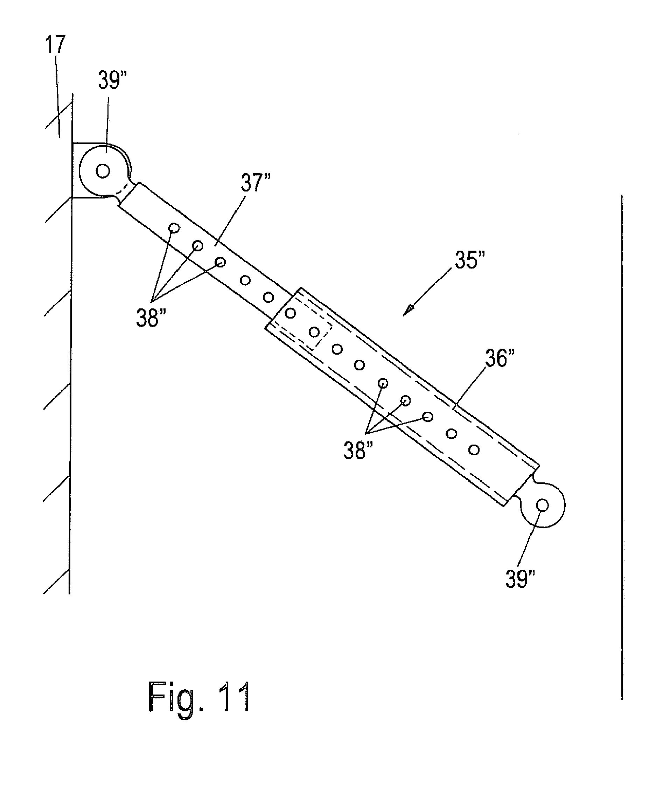

In Figur 11 ist eine modifizierte Ausgestaltung eins Ankers 35" gezeigt, der ebenfalls in der Länge verstellbar ist. Hierfür greift ein Stab 37" in eine Hülse 36" ein, wobei sowohl in dem Stab 37" als auch in der Hülse 36" Öffnungen 38" ausgebildet sind, die dann durch entsprechende Stifte zur Fixierung durchgriffen werden können. An dem Stab 37" ist ein Anknüpfungspunkt 39" zur Verbindung an einer Wand 17 ausgebildet und gleichermaßen ist ein Anknüpfungspunkt 39" zur Verbindung an einem Halteteil 20 an der Hülse 36" ausgebildet.

In den dargestellten Ausführungsbeispielen werden die Halteteile 20, 20', 59 jeweils an einem Profil 3 montiert, das verschiebbar gelagert ist. Es ist natürlich auch möglich, an dem Gestell 2 zusätzliche Bauteile zu montieren, die eine verschiebbare Lagerung relativ zu einem feststehenden Anker ermöglichen.

## Patentansprüche

1. Montagesystem für Solarmodule (6), mit einem Gestell (2) auf dem ein oder mehrere plattenförmige Solarmodule (6) gehalten sind, wobei das Gestell (2) auf einer Unterkonstruktion (7, 9, 11) abgestützt ist, die an einem Untergrund festgelegt ist, **dadurch gekennzeichnet, dass** ein Anker (13, 35) vorgesehen ist, der an einem Bauwerk (17) festlegbar ist und das Gestell (2) in einem oberen Bereich abstützt, wobei das Gestell (2) relativ zu dem Anker (13, 35) verschiebbar gehalten ist.

2. Montagesystem nach Anspruch 1, **dadurch gekennzeichnet, dass** an dem Anker (13, 35) Führungsmittel (21, 22, 24, 41, 59) angebracht oder ausgebildet sind, und der Anker (13, 35) relativ zu einem Profil (3) in dessen Längsrichtung verschiebbar ist.

3. Montagesystem nach Anspruch 1 oder 2, **dadurch gekennzeichnet, dass** das Gestell (2) sich nach oben erstreckende Profile (3) aufweist und mindestens eines dieser Profile (3) relativ zu einem Anker (13, 35) verschiebbar gehalten ist.

4. Montagesystem nach einem der Ansprüche 1 bis 3, **dadurch gekennzeichnet, dass** der Verstellweg des Profils (3) relativ zu dem Anker (13, 35) mindestens 10cm beträgt, vorzugsweise mehr als 1 m oder die gesamte Profillänge.

5. Montagesystem nach einem der Ansprüche 1 bis 4, **dadurch gekennzeichnet, dass** das Gestell (2) mehrere sich nach oben erstreckende Profile (3) aufweist, die über horizontale Profile (2, 5) miteinander verbunden sind.

6. Montagesystem nach einem der Ansprüche 1 bis 5, **dadurch gekennzeichnet, dass** die Führungsmittel (21, 22, 24, 49) an dem Anker (13, 35) ein sich nach oben erstreckendes Profil (3) zumindest teilweise umgreifen

7. Montagesystem nach einem der Ansprüche 1 bis 6, **dadurch gekennzeichnet, dass** die Führung eines sich nach oben erstreckenden Profils (3) durch ein Langloch (32') erfolgt, das von einem Bolzen (41) durchgriffen ist

8. Montagesystem nach einem der Ansprüche 1 bis 7, **dadurch gekennzeichnet, dass** der Anker (13, 35) mit einem Halteteil (20) verbunden ist, das gegenüber einem an einer Wand (17) festgelegten Teil (35) in horizontale Richtung verstellbar ausgebildet ist.

9. Montagesystem nach einem der Ansprüche 1 bis 8, **dadurch gekennzeichnet, dass** der Anker (13, 35) mit einem Halteteil (58) verbunden ist, das gegenüber einem an einer Wand (17) festgelegten Teil (51) um eine horizontale und/oder vertikale Achse (53, 56) verschwenkbar gelagert ist.

10. Montagesystem nach einem der Ansprüche 1 bis 9, **dadurch gekennzeichnet, dass** der Anker (13, 35) einen in eine Wand einfügbaren Abschnitt aufweist, an dem Dichtmittel (29) zur Abdichtung der Wanddurchführung fixiert sind.

11. Montagesystem nach einem der Ansprüche 1 bis 10, **dadurch gekennzeichnet, dass** der Anker (35', 35") in der Länge verstellbar ausgebildet ist.

12. Montagesystem nach einem der Ansprüche 1 bis 11, **dadurch gekennzeichnet, dass** das Bodenteil (11) um eine horizontale Achse (10) verschwenkbar an einem feststehenden Teil (11) gehalten ist.
